# EUROPEAN PATENT APPLICATION

(11) **EP 1 347 238 A2**
(43) Date of publication of application: **24.09.2003**
(21) Application number: 03472003.7
(22) Date of filing: 12.03.2003
(51) Int. Cl.: F23G 7/12, F23G 5/24, F23G 5/027, F23G 5/04

(54) **Equipment for heat destruction of whole car tyres**

(30) Priority: 18.03.2002 BG 10652502
(71) Applicant: Ecoprocess AD, 9300 Dobrich (BG)
(72) Inventor: Dimitrov, Dimitar Hristow, 9700 Shumen (BG); Hristov, Hristo Dimitrov, 9700 Shumen (BG)
(74) Representative: Tzvetkova, Maria Atanassova

(57) **Abstract**

The invention relates to equipment for heat destruction of whole car tyres, applicable in the chemical industry.

The equipment consists of a vertical cylindrical reactor (14) with combined heating and spiral guiding plates (30) on its outside wall, a horizontal entering system which first box have two holes linked to entering gas-mains, correspondingly for entering of part of the burnt gases from the combustion camera (14) in the first box, and for bringing of inert gas from outside source in the first box. The system for abstraction of solid fractions consists two pairs of rollers (18) situated mutually perpendicular. Condensation - precipitation system for abstraction of gas and liquid fractions have a centrifugal ventilator and dross restrictor for the finest separation of liquid fractions from pyrolysis gases.

## Description

### Technical field

The invention relates to equipment for heat destruction of whole car tyres, applicable in the chemical industry for treatment of a solid substance, consisting of carbon and hydrocarbons to liquid hydrocarbon fractions, solid carbon and hydrocarbon combustible gases.

### Background of the invention

It is known an equipment for heat destruction of whole car tyres [1], which consists of a vertical cylindrical reactor with combined (external and internal) heating, of a horizontal entering system for delivery of tyres to the reactor, of a system for removal of solid fractions with one pair of rollers above the conveyor belt and of a condensation - precipitation system for abstraction of gas and liquid fractions with centrifugal ventilator and dross restrictor. The heating system of the reactor is with cylindrical construction and comprises combustion camera with tubular recuperator, gas torches with multi spark start, built in the round base of the combustion camera and with fireproof wall in which lower and upper part are situated two concentric canals, correspondingly for allowing air for the combustion process and for abstraction of the burnt gases from the combustion camera. The horizontal entering system comprises a forehead box with pneumocylinder, first box with second pneumocylinder and with pending automatically closing packing valve and second box with second pending valve and hood with gasket, which hood closes the reactor itself. The first box has as well two holes, situated in the wall, which is in front of its pending automatic valve, which holes are for feeding and abstraction of part of the burnt gases from the combustion camera in the first box via an entering and outgoing gas-mains. This known equipment has a construction of its combustion camera and smooth external surface of its vertical cylindrical reactor, which lead to low thermal exchange between the reactor and the hot gases and as well to low heating effectiveness of the process. Because of the specific abstraction of the solid products from the reactor by means of two oppositely rotating rollers, the dimensions of the linked to them drawing assemblies are extended. This is leading to increase of the price of the equipment. The burnt gases from the combustion camera which pass through the first box from the entering system do not ensure sufficiently hopeful protection against penetrating of oxygen into the reactor.

### Technical subject-matter of the invention

The object of the invention is equipment for heat destruction of whole car tyres, which provides high heating effectiveness of the process, normal dimensions and low prime cost of the equipment and linked to it meetings, higher protection against penetration of oxygen into the reactor in its exploitation.

The equipment for heat destruction of whole car tyres, according to the present invention consists of a vertical cylindrical reactor with combined (external and internal) heating, possessing a spiral guiding plates on its outside wall, a horizontal entering system for delivery of tyres to the reactor, a system for abstraction solid fractions with two pairs of rollers situated mutually perpendicular above a conveyor belt and a condensation - precipitation system for abstraction of gas and liquid fractions with centrifugal ventilator and dross restrictor. The heating system of the reactor is with cylindrical construction and includes combustion camera with tubular recuperator, gas torches with multi-spark start, built in the round base of the combustion camera and fireproof wall in which lower and upper part are situated two concentric canals, correspondingly for feeding of air for the combustion process and for abstraction of burnt gases from the combustion camera. The horizontal entering system consists of forehead box with pneumocylinder, first box with second pneumocylinder and with pending automatic closed gasket valve and second box with second pending valve and hood with gasket, which hood closes too the reactor itself. The first box has also two holes, situated in the wall, which is in front of its pending valve, which holes are for feeding of part of the burnt gases from the combustion camera in the first box and for bringing an additional quantity inert gas from outside source in the first box by entering gas-mains. The advantages of the invention are: Better heating of the reactor and high heating effectiveness of the process of destruction owing to the existence of spiral guiding plates on the outside wall of the reactor, which prolong the air-way of the fuel gases; There is sizable decrease of the outlet cross-section of the system for abstraction and decreased dimensions of the followings acceptance meetings, linked by the system for abstraction to the equipment, owing to the additional pair of rollers; Low prime cost of the equipment and linked to it meetings; It is realized warrant absence of oxygen in the first box from the entering system and higher operate reliability of the equipment owing to bringing of inert gas in the first box, leading to protection against penetration of oxygen into the reactor in its exploitation.

### Description of figures

Invention is illustrated in details in the enclosed drawings, in which:
Figure 1 shows a top view of the entering system of the equipment;
Figure 2 - a view of the equipment from its front quarter with partial vertical section.

### Examples for realizing of the invention

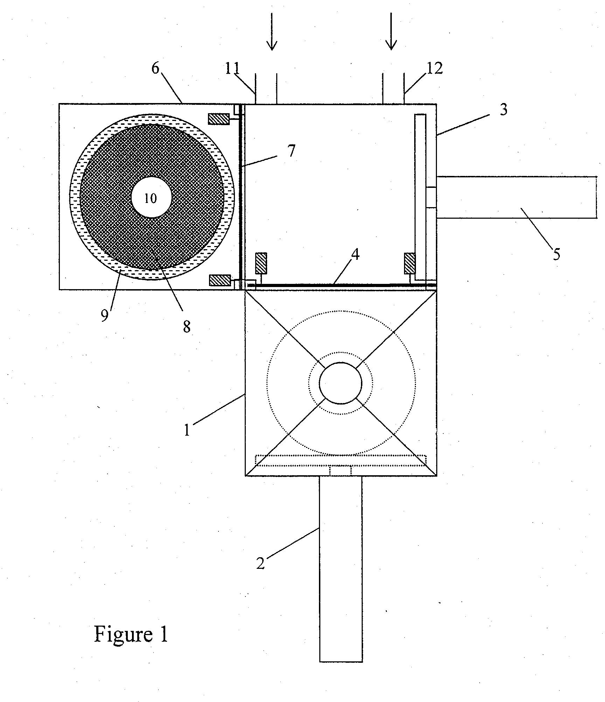

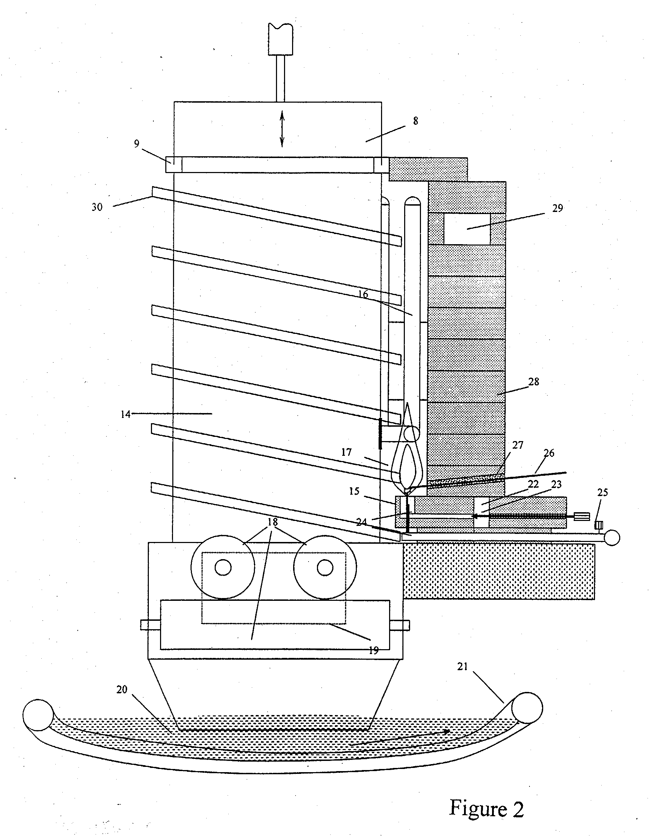

The equipment for heat destruction of whole car tyres is shown on figure 1 and figure 2. It consists of a vertical cylindrical reactor 14 with combined (external and internal) heating, possessing a spiral steel guiding plates 30 on its outside wall, a horizontal entering system for delivery of tyres to the reactor 14, a system for abstraction of solid fractions with two pairs of rollers 18 situated mutually perpendicular above a conveyor belt 21 and a condensation - precipitation system for abstraction of gas and liquid fractions with centrifugal ventilator and dross restrictor. The heating system of the reactor 14 is with cylindrical construction and includes, according to figure 2 combustion camera 17 with tubular recuperator 16, ceramic diffusion- turbulent gas torches 15 with multi-spark start, built in the round base of the combustion camera 17 and fireproof wall 28, in which lower and upper part are situated two concentric canals 22, 29, correspondingly for feeding of air to the torches 15 and for abstraction of burnt gases from the combustion camera 17. There is a possibility for individual regulation of the air flow to the torches 15 by the conical cranes 23 and for individual regulation of the passing gas flow from gas-main 24 by cranes 25. The start up of the torches 15 is electronic, multi-spark, that one electrode is the gas-main 24, grounded, and other electrode 26 passes trough high voltage insulator 27 in the wall 28.
The horizontal entering system of the equipment (figure 1) consists of forehead box 1 with pneumocylinder 2, first box 3 with second pneumocylinder 5 and with pending automatic closing gasket valve 4 and second box 6 with second pending valve 7 and hood 8 with gasket 9, which hood 8 closes too the reactor 14. The first box 3 has also two holes 11 and 12, situated in the wall, which is in front of its pending automatic valve 4, which holes 11, 12 are linked to entering gas-mains, correspondingly for entering of part of the burnt gases from the combustion camera 14 in the first box 3, and for bringing an additional quantity inert gas from outside source in the first box 3.

The function of this equipment is as follows: Car tyres by the conveyor belt 21 are moved to the forehead box 1 and with the help of the pneumocylinder 2 are pushed through the pending valve 4 in the first box 3, where they are dried and are preliminary warmed up by part of the burnt gases from the combustion camera 14, entered through the gas-main 11. By gas-main 12 in the first box 3 is entered also additional quantity inert gas, which averts penetrating of oxygen in the reacting space. The tubular recuperator 16 warms up part of the no-condensed gases in the condensation - precipitation system and they are entered again to the reactor 14.

The dried and warmed up tyres stay in the first box 3 a defined time and by second pneumaocylinder 5, valve 7 and opened hood 8 pass in the reactor 14, after which the hood 8 is closed.
Movement of the tyres in the reactor 14 is under its own weight. Under the effective combined heating of the torches 15 and the gases from recuperator 16 is made pyrolysis of the car tyres. By the conveyor belt 21 the solid products are passed to the separating system, which distributes them in different containers. The finest separation of liquid fractions is executed by centrifugal ventilator and the inbuilt in it dross restrictor. The various liquid products are collected into different containers.

## Claims

1. Equipment for heat destruction of whole car tyres, consisting of a vertical cylindrical reactor with combined external and internal heating, a horizontal entering system for delivery of tyres to the reactor, a system for abstraction of solid fractions with one pair of rollers above a conveyor belt and a condensation - precipitation system for abstraction of gas and liquid fractions with centrifugal ventilator and dross restrictor, the heating system of the reactor is with cylindrical construction and includes combustion camera with tubular recuperator, gas torches with multi spark start, built in the base of the combustion camera and fireproof wall in which lower and upper part are situated two concentric canals, correspondingly for feeding with air the combustion process and for to abstraction of burnt gases from the combustion camera; the horizontal entering system consists of a forehead box with pneumocylinder, first box with second pneumocylinder and with pending automatic closed gasket valve and second box with second pending valve and hood with gasket, which hood closes too the reactor itself; the first box has as well two holes, situated in the wall, which is in front of its pending valve, one of these holes is for entering of part of the burnt gases from the combustion camera in the first box, characterized with that the second hole (12) from the first box (3) is too one hole for to entering of additional quantity inert gas from outside source in the first box (3), the reactor (14) possess spiral guiding plates (30) on its outside wall, and the system for abstraction of solid fractions possess two pairs of rollers (18), situated mutually perpendicular.
